**Europäisches Patentamt**

**European Patent Office**

**Office européen des brevets**

(11) Veröffentlichungsnummer : **0 349 839 B1**

(12) **EUROPÄISCHE PATENTSCHRIFT**

(45) Veröffentlichungstag der Patentschrift :
06.05.92 Patentblatt 92/19

(51) Int. Cl.$^5$ : **G01N 21/35**

(21) Anmeldenummer : **89111338.3**

(22) Anmeldetag : **22.06.89**

(54) **Mehrkomponenten-Photometer.**

(30) Priorität : **07.07.88 DE 3822946**

(43) Veröffentlichungstag der Anmeldung :
**10.01.90 Patentblatt 90/02**

(45) Bekanntmachung des Hinweises auf die
Patenterteilung :
**06.05.92 Patentblatt 92/19**

(84) Benannte Vertragsstaaten :
**DE FR GB**

(56) Entgegenhaltungen :
**DE-A- 2 646 580**
**US-A- 3 904 880**

(73) Patentinhaber : **BODENSEEWERK
PERKIN-ELMER GMBH
Askaniaweg 4
W-7770 Überlingen/Bodensee (DE)**

(72) Erfinder : **Spaeth, Tilmann
Hutbühl 8
W-7770 Ernatsreute (DE)**

(74) Vertreter : **Weisse, Jürgen, Dipl.-Phys. et al
Patentanwälte Dipl.-Phys. Jürgen Weisse
Dipl.-Chem. Dr. Rudolf Wolgast Bökenbusch
41 Postfach 11 03 86
W-5620 Velbert 11 Langenberg (DE)**

## Beschreibung

Die Erfindung betrifft ein Mehrkomponenten - Photometer, enthaltend

(a) eine ein spektrales Kontinuum emittierende Lichtquelle, von welcher ein Meßlichtbündel ausgeht,

(b) eine Probenküvette, in welche ein Probengas einleitbar ist und durch welche das Meßlichtbündel hindurchtritt,

(c) eine Mehrzahl von ersten Gasküvetten, die mit unterschiedlichen, in dem Probengas gesuchten Gasen gefüllt sind,

(d) eine oder mehrere zweite Gasküvetten, von denen jede wenigstens einer der ersten Gasküvetten zugeordnet ist und ein Referenzgas enthält,

(e) eine oder mehrere Filter, von denen jedes nur einen begrenzten Spektralbereich um eine Absorptionsbande eines in einer ersten Gasküvette enthaltenen Gases herum durchläßt (Blockingfilter),

(f) einen Detektor, welcher von dem Meßlichtbündel beaufschlagt ist, und

(g) Umschaltmittel durch welche in den Strahlengang des Meßlichtbündels wahlweise zur Herstellung eines Meßstrahlenganges eine erste Gasküvette mit einem zugehörigen Blockingfilter oder zur Herstellung eines Referenzstrahlenganges eine zweite Gasküvette mit einem zugehörigen Blockingfilter hineinbewegbar sind.

Mehrkomponenten - Photometer dieser Art dienen dazu, die Konzentration oder den Partialdruck eines gesuchten Gases in einem das Probengas bildenden Gasgemisch zu bestimmen. Das gesuchte Gas in dem Probengas absorbiert bei einer bestimmten Absorptionsbande. Nach dem Durchtritt des Meßlichtbündels durch die Probenküvette ist das Meßlichtbündel daher im Wellenlängenbereich der Absorptionsbande umso stärker geschwächt, je höher der Partialdruck des gesuchten Gases in dem Gasgemisch des Probengases ist. Tritt dieses geschwächte Meßlichtbündel dann durch ein "Gasfilter", also eine der ersten Gasküvetten, die mit dem gesuchten Gas gefüllt ist, dann wird das Meßlichtbündel in diesem Wellenlängenbereich weiter geschwächt. Tritt das geschwächte Meßlichtbündel jedoch nach einer Umschaltung statt durch die erste Gasküvette durch eine zweite Gasküvette, die mit einem Referenzgas gefüllt ist und das gesuchte Gas nicht enthält, dann erfolgt keine weitere Schwächung. Die Differenz der mit dem "Meßstrahlengang" mit erster Gasküvette und der im "Referenzstrahlengang" mit zweiter Gasküvette erhaltenen Intensitäten ist umso geringer, je stärker das Meßlichtbündel schon in der Probenküvette geschwächt wurde. Wenn das Probengas das gesuchte Gas überhaupt nicht enthält, dann wird das Meßlichtbündel in dem Bereich der besagten Absorptionsbande im Idealfall gar nicht absorbiert. Die Absorption der betreffenden Wellenlänge in der ersten Gasküvette ist in absoluten Werten der Intensität sehr stark. Es ergibt sich demgemäß ein erheblicher Unterschied zwischen dem Meßstrahlengang, in welchem diese Absorption stattfindet, und dem Referenzstrahlengang, in welchem eine zweite Gasküvette angeordnet ist und die Wellenlängen der Absorptionsbande des gesuchten Gases nicht absorbiert werden. Ist dagegen das gesuchte Gas in dem Probengas mit hohem Partialdruck enthalten, dann wird das Meßlichtbündel im Wellenlängenbereich der Absorptionsbande fast vollständig absorbiert. Es macht dann keinen Unterschied in den auf den Detektor fallenden Intensitäten mehr, ob die erste Gasküvette oder die zweite Gasküvette sich im Strahlengang des Meßlichtbündels befindet.

Es ist zu beachten, daß die Ausdrücke "Meßstrahlengang" und "Referenzstrahlengang" sich hier auf ein einziges, geometrisch unverändertes Meßlichtbündel beziehen, in welches lediglich unterschiedliche optische Bauteile eingesetzt werden.

Da die Absorptionsbande eines gesuchten Gases nur einen schmalen Bereich des gesamten Spektrums ausmacht, würde die Absorption im Wellenlängenbereich dieser Absorptionsbande nur einen geringen Prozentsatz der Gesamtintensität ausmachen, die auf den Detektor fällt. Auch könnten Störungen dadurch hervorgerufen werden, daß in einigen Wellenlängenbereichen sich Absorptionsbanden des gesuchten Gases mit Absorptionsbanden anderer Gase überlappen. Deshalb sind zusätzliche Filter, "Blockingfilter" vorgesehen, welche jeweils aus dem Kontinuum nur einen Wellenlängenbereich um eine betrachtete Absorptionsbande des gesuchten Gases herum durchlassen.

Bei einem Mehrkomponenten - Photometer sind wahlweise verschiedene "erste" Gasküvetten mit verschiedenen gesuchten Gasen und zugeordnete "zweite" Gasküvetten mit geeigneten Referenzgasen in den Strahlengang des Meßlichtbündels hineinbewegbar. Es kann dann wahlweise der eine oder der andere Bestandteil in dem Probengas bestimmt werden.

Bei solchen Mehrkomponenten - Photometern muß für jeden zu bestimmenden Bestandteil ein zugehöriges Blockingfilter vorgesehen werden. Die Wellenlängenbereiche der Absorptionsbanden der verschiedenen zu bestimmenden Gase sind unterschiedlich. Dementsprechend sind auch die aus dem Kontinuum ausgeschnittenen Wellenlängenbereiche um diese Absorptionsbanden heurum im allgemeinen verschieden.

Aus der DE-A-26 46 580 ist ein einfaches Photometer bekannt, bei dem ein "Blockingfilter" das aus dem Kontinuum nur einen Wellenlängenbereich um eine betrachtete Absorptionsbande des gesuchten Gases herum durchlässt, feststehend im Strahlengang vor dem Probenbehälter angeordnet ist. Bei diesem Gerät wäre zur Ermittlung des Partialdruckes eines weiteren Gases ein vollständiger Umbau erforderlich.

Aus der US-A-3 904 880 ist ein Mehrkomponenten-Photometer bekannt, das mehrere Blockingfilter aufweist. Diese sind auf einem einzigen Filterrad montiert, das auch die ersten und zweiten Gasküvetten trägt. Es sitzt dann hinter jeder Gasküvette jeweils ein für diese geeignetes Blockingfilter. Das ist mechanisch einfach, erfordert jedoch für die erste und die zweite einem gesuchten Gas zugeordnete Gasküvette je ein Blockingfilter.

Die Durchlaßbereiche solcher Blockingfilter sind nun im allgemeinen breit verglichen mit der Breite der Absorptionsbanden. Dadurch können kleine Änderungen in den Filtercharakteristiken, wie sie etwa durch Temperaturänderungen hervorgerufen werden, schon zu Störsignalen führen, die in die Größenordnung des Nutzsignals kommen. Paare von Filtern, bei denen solche Änderungen in übereinstimmender Weise auftreten, können, wenn überhaupt, nur durch aufwendige Selektion erhalten werden.

Der Erfindung liegt daher die Aufgabe zugrunde, ein Mehrkomponenten - Photometer der eingangs definierten Art so auszubilden, daß sich Änderungen der "Blockingfilter" auf die Messung nicht auswirken.

Erfindungsgemäß wird diese Aufgabe dadurch gelöst, daß

(h) die Umschaltmittel Küvettenwechselmittel zum Hineinbewegen der ersten und zweiten Gasküvetten in den Strahlengang des Meßlichtbündels und davon getrennte Filterwechselmittel zum Hineinbewegen der Blockingfilter in den Strahlengang des Meßlichtbündels enthalten, und

(i) die Küvettenwechselmittel und die Filterwechselmittel so gesteuert sind, daß ein und dasselbe Blockingfilter in Verbindung mit dem zugehörigen ersten Gasfilter und in Verbindung mit dem zu diesem ersten Gasfilter gehörigen zweiten Gasfilter im Strahlengang des Meßlichtbündels angeordnet ist.

Erfindungsgemäß wird also bei einem MehrkomponentenPhotometer für den Meßstrahlengang und den Referenzstrahlengang ein und dasselbe Blockingfilter verwendet. Dadurch wirken sich Änderungen in der Charakteristik dieses Blockingfilters praktisch nicht auf die Messung aus. Außerdem ist für jedes zu bestimmende Gas nur ein einziges Blockingfilter erforderlich. Da solche Filter ziemlich teuer sind, wird das gesamte Gerät trotz des erhöhten mechanischen Aufwandes für zusätzliche Filterwechselmittel und die zugehörigen Antriebe und Steuerungen weniger aufwendig.

Eine vorteilhafte Ausgestaltung der Erfindung ist Gegenstand des Patentanspruchs 2.

Ein Ausführungsbeispiel der Erfindung ist nachstehend unter Bezugnahme auf die zugehörigen Zeichnungen näher erläutert.

Fig.1 ist eine schematische Darstellung eines Mehrkomponenten - Photometers.

Fig.2 ist eine Seitenansicht einer konstruktiven Ausführung eines Mehrkomponenten - Photometers.

Fig.3 zeigt im einzelnen in Seitenansicht ein Filterrad, das die ersten und zweiten Gasküvetten trägt.

Fig.4 ist eine Ansicht des Filterrades von rechts in Fig.3 gesehen.

Fig.5 zeigt im einzelnen in Seitenansicht ein Filterrad, das die Blockingfilter trägt.

Fig 6 ist eine Ansicht des Filterrades von Fig.5 von links in Fig.5 gesehen.

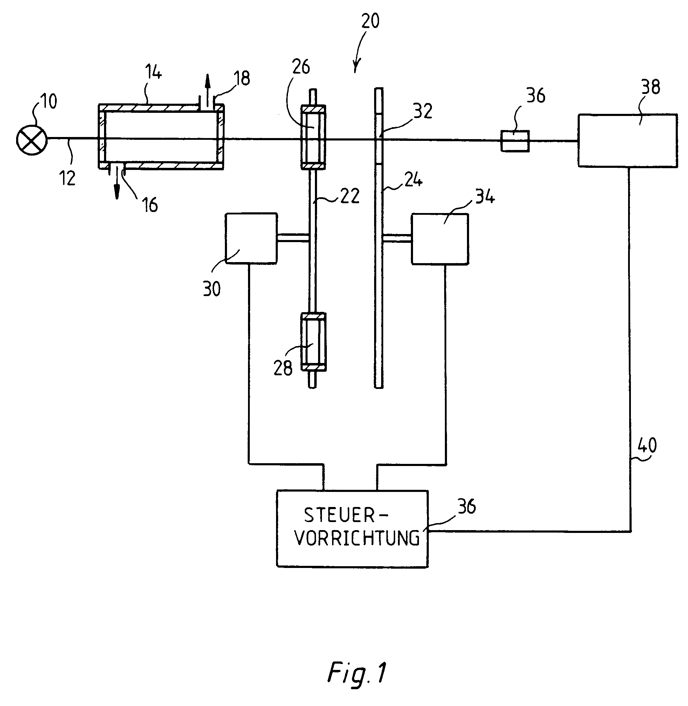

In Fig.1 ist mit 10 eine Lichtquelle bezeichnet, die ein spektrales Kontinuum aussendet. Von der Lichtquelle 10 geht ein Meßlichtbündel 12 aus. Das Meßlichtbündel 12 durchsetzt eine Probenküvette 14, durch welche ein Probengas in Form eines Gasgemisches hindurchtritt. Das Probengas tritt durch einen Einlaß 16 in die Probenküvette 14 ein und tritt durch einen Auslaß (18) aus der Probenküvette 14 aus. Hinter der Probenküvette 14 sind Umschaltmittel 20 angeordnet, durch welche wahlweise ein Meßstrahlengang oder ein Referenzstrahlengang herstellbar ist. Die Umschaltmittel 20 enthalten ein erstes Filterrad 22 und ein zweites Filterrad 24.

In dem ersten Filterrad 22 sind als Filter eine Mehrzahl von ersten Gasküvetten 26 und eine oder mehrere zweite Gasküvetten 28 angeordnet. In der schematischen Darstellung von Fig.1 sind davon nur eine erste und eine zweite Gasküvette zu sehen. Das Filterrad 22 ist von einem Stellmotor 30 antreibbar.

In dem zweiten Filterrad 24 sind "Blockingfilter" 32 angeordnet. Das sind Filter, welche von einem Kontinuum jeweils nur einen begrenzten Wellenlängenbereich durchlassen. Das Filterrad 24 ist von einem Stellmotor 34 antreibbar.

Die beiden Stellmotore sind mit einer Steuervorrichtung 36 verbunden.

Jede der ersten Gasküvetten 26 ist mit einem gesuchten und in dem Probengas zu bestimmenden Gas gefüllt. Der ersten Gasküvette 26 ist eine zweite Gasküvette 28 zugeordnet, die mit einem Referenzgas gefüllt ist, welches das gesuchte Gas nicht enthält und daher in dem Bereich der benutzten Absorptionsbande des gesuchten Gases nicht absorbiert. Jedem Paar von ersten und zweiten Gasküvetten 26 und 28 ist ein einziges Blockingfilter 32 zugeordnet.

Das Blockingfilter 32 kann ein Interferenzfilter sein. Das Blockingfilter läßt von dem Kontinuum, das von der Lichtquelle 10 emittiert wird, jeweils nur einen relativ schmalen Wellenlängenbereich um die benutzte Absorptionsbande des gesuchten Gases herum durch.

Das Meßlichtbündel 12 fällt dann auf einen Detektor 36, der ein Signal nach Maßgabe der Intensität des Meßlichtbündels 12 liefert. Dieses Signal ist auf eine Signalverarbeitungsschaltung 38 aufgeschaltet. Die Signalverarbeitungsschaltung 38 erhält über den Signalweg 40 Signale von der Steuervorrichtung 36, welche angeben, welche Gasküvette sich jeweils im Strahlengang des Meßlichtbündels befindet. Die Signalverarbeitungsschaltung erzeugt aus den Meßwerten, die mit dem Meßstrahlengang und mit dem Referenzstrahlengang für ein bestimmtes Gas erhalten wurden, einen Meßwert für die Konzentration oder den Partialdruck des betreffenden Gases in der Probe.

Die Steuervorrichtung 36 steuert die Filterräder 22 und 24 über die Stellmotore 30 und 34 so, daß bei Einschalten der ersten Gasküvette 26 eines bestimmten Gases und bei Einschalten der zugeordneten zweiten Gasküvette 28 ein und dasselbe Blockingfilter 32 sich im dem Strahlengang des Meßlichtbündels 12 befindet.

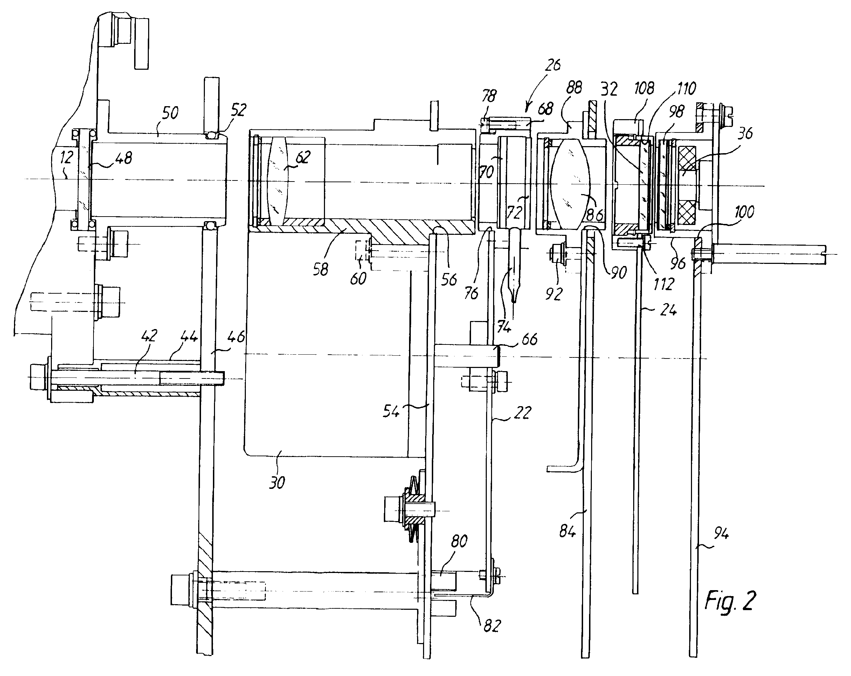

Die konstruktive Ausführung des MehrkomponentenPhotometers ist in den Figuren 2 bis 6 dargestellt.

Die Probenküvette 14 ist durch Bolzen 42 und Abstandsstücke 44 an einer Trennwand 46 befestigt. Das Meßlichtbündel 12 tritt durch ein Fenster 48. Ein Tubus 50 ist an der Probenküvette 14 befestigt und ragt durch einen Durchbruch 52 der Trennwand 46 hindurch. Das Meßlichtbündel 12 verläuft längs der Achse des Tubus 50.

Eine zweite Trennwand 54 ist im Abstand parallel zu der Trennwand 46 angeordnet. In einem Durchbruch 56 der Trennwand 54 sitzt ein Tubus 58. Der Tubus 58 ist durch Bolzen 60 mit der Trennwand 54 verschraubt. Der Tubus 58 ist gleichachsig zu dem Tubus 50. In dem Tubus 58 sitzt eine Linse 62. Weiterhin ist an der Trennwand 54 der Stellmotor 30 mit einer Welle 66 befestigt.

Auf der Welle 66 sitzt das Filterrad 22. Das Filterrad trägt Gasküvetten, von denen in Fig.2 eine Gasküvette 26 zu sehen ist. Die Gasküvette 26 weist eine hohlzylindrische Fassung 68 auf, in welche zwei parallele Fenster 70 und 72 eingekittet sind. An der Fassung 68 ist ein Füllstutzen 74 angebracht. Der Füllstutzen 74 ist nach dem Einfüllen eines Gases an der Spitze, z.B. durch Zuschmelzen, verschlossen. In die Gasküvette 26 ist ein Gas eingefüllt, dessen Konzentration in einem Probengas bestimmt werden soll. In eine ähnlich aufgebaute Gasküvette 28 ist ein Referenzgas eingefüllt, das im Bereich der Absorptionsbande des Gases der Gasküvette 26 nicht absorbiert. Die Gasküvette 26 sitzt mit ihrer Fassung in einem Durchbruch 76 des Filterrades 22 und ist mit Schraubbolzen 78 befestigt. In der dargestellten Position des Filterrades 22 fluchtet die Gasküvette 26 mit dem Tubus 58. Das Meßlichtbündel 12 tritt durch den Tubus 50, die Linse 62 und den Tubus 58 und durch die Gasküvette 26.

An der Trennwand 54 ist eine Lichtschranke 80 angebracht. In diese Lichtschranke 80 greift bei einer bestimmten Stellung des Filterrades 22 eine Fahne 82 ein, die an dem Filterrad 22 angeschraubt ist. Auf diese Weise wird eine definierte Referenzposition des Filterrades 22 gewonnen, auf welche die anderen, von dem Stellmotor 30 einzustellenden Positionen bezogen werden können.

In einer dritten Trennwand 84 sitzt eine weitere Linse 86 in einer Fassung 88. Die Fassung 88 sitzt in einem Durchbruch 90 der Trennwand 84 und ist durch Schrauben 92 mit der Trennwand 84 verbunden.

Eine vierte Trennwand 94 trägt ein Gehäuse 96 mit dem Detektor 36. Das Gehäuse 96 ist durch ein Fenster 98 abgeschlossen. Das Gehäuse 96 sitzt in einem Durchbruch 100 der Trennwand 94. Eine Kappe 101 deckt Leiterplatten und elektrische Bauteile zur Verarbeitung des Signals des Detektors 36 ab.

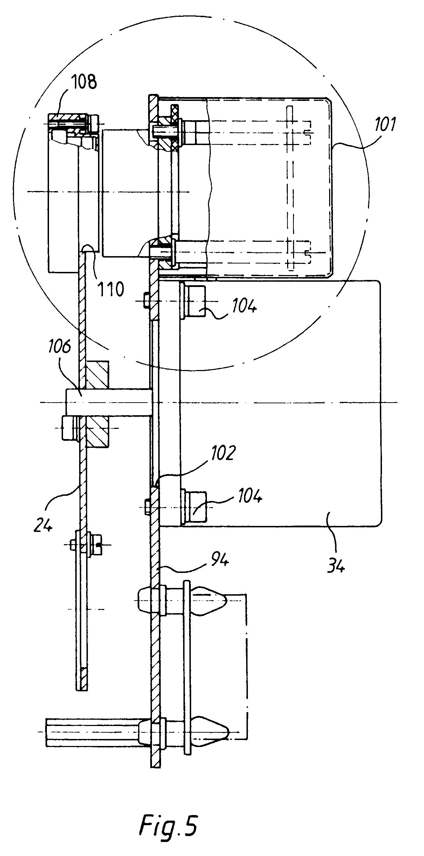

Wie am besten aus Fig.5 ersichtlich ist, sitzt an der Trennwand 94 auf deren der Trennwand 84 abgewandten Seite der Stellmotor 34. Der Stellmotor 34 ist in einem Durchbruch 102 der Trennwand 94 zentriert und durch Schrauben 104 mit der Trennwand 94 verbunden. Auf einer Welle 106 des Stellmotors 34 sitzt das Filterrad 24. Das Filterrad 24 trägt die Blockingfilter 32 in Form von Interferenzfiltern, die in jeweils einer Fassung 108 gehaltert sind. Die Fassung 108 jedes Blockingfilters 32 sitzt in einem Durchbruch 110 des Filterrades 24 und ist durch Schrauben 112 mit dem Filterrad 24 verbunden.

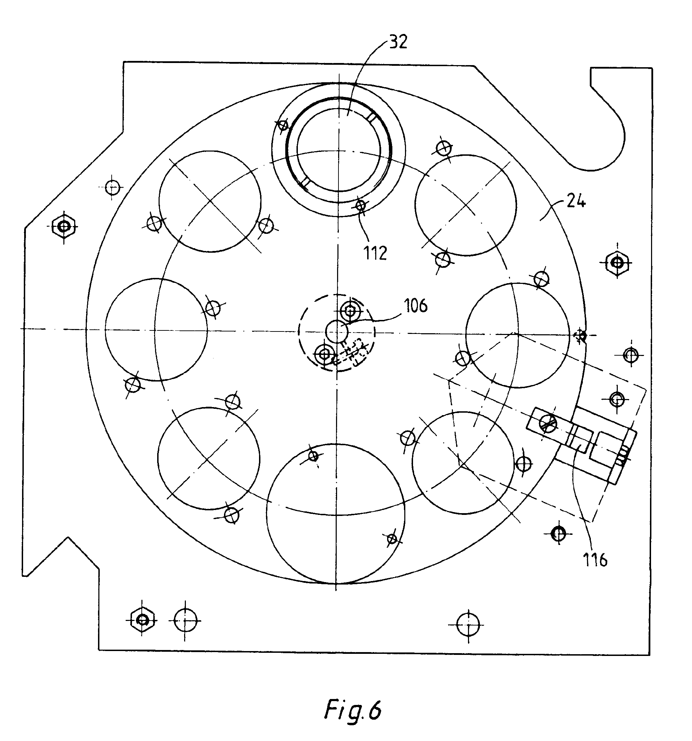

Eine Lichtschranke 116 an der Trennwand 94 liefert die Referenzposition für das Filterrad 24 (Fig. 6). Die Lichtschranke 116 ist ähnlich aufgebaut wie die Lichtschranke 80 (Fig. 2).

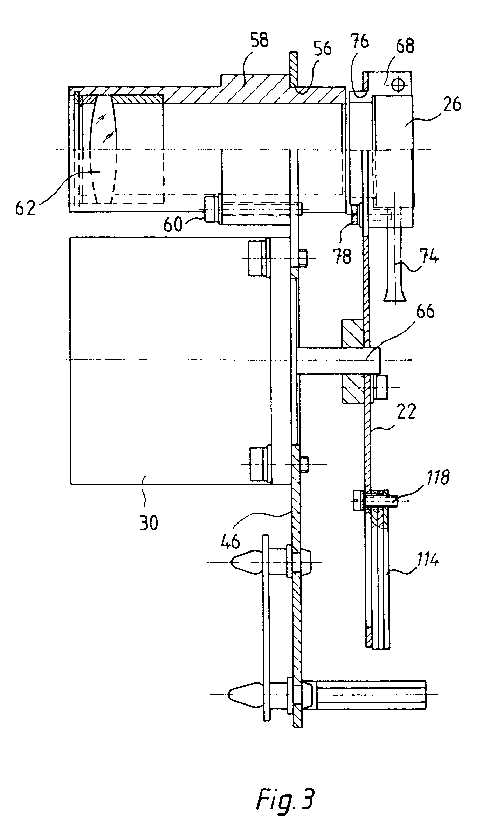

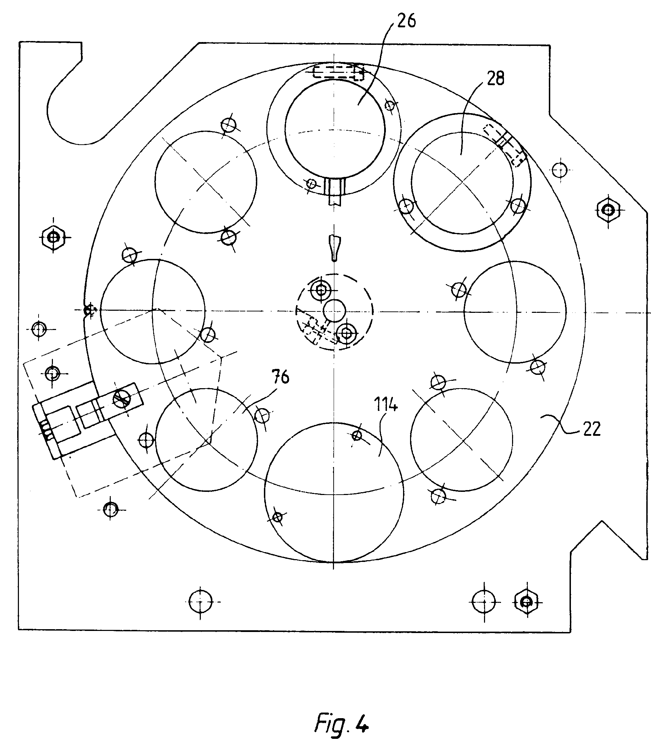

Wie aus Fig.4 ersichtlich ist, sitzen in dem Filterrad 22 Gasküvetten 26 und 28 nebeneinander. In Fig.4 sind nur zwei Gasküvetten dargestellt. Zur statischen Auswuchtung des Filterrades 22 sind auf den gegenüberliegenden Seiten Gegengewichte 114 angebracht, wovon nur eines gezeichnet ist. Jedes Gegengewicht besteht aus mehreren übereinanderliegenden Scheiben, die durch Schrauben 118 befestigt sind (Fig.3). In die Durchbrüche 76 des Filterrades 22 aber sind erfindungsgemäß mehrere Gasküvetten 26 und 28 eingesetzt werden, um mehrere Bestandteile des Probengases zu bestimmen. Es können auch einer zweiten Gasküvette 28 mehr als eine erste Gasküvette 26 zugeordnet sein.

## Patentansprüche

1. Mehrkomponenten - Photometer, enthaltend
(a) eine ein Kontinuum emittierende Lichtquelle (10), von welcher ein Meßlichtbündel (12) ausgeht,
(b) eine Probenküvette (14), in welche ein Probengas einleitbar ist und durch welche das Meßlichtbündel (12) hindurchtritt,

(c) eine Mehrzahl von ersten Gasküvetten (26), die mit unterschiedlichen, in dem Probengas gesuchten Gasen gefüllt sind,

(d) eine oder mehrere zweite Gasküvetten (28), von denen jede wenigstens einer der ersten Gasküvetten (26) zugeordnet ist und ein Referenzgas enthält,

(e) ein oder mehrere Blockingfilter, d.h. Filter (32), von denen jedes nur einen begrenzten Spektralbereich um eine Absorptionsbande eines in einer ersten Gasküvette (26) enthaltenen Gases herum durchläßt,

(f) einen Detektor (36), welcher von dem Meßlichtbündel (12) beaufschlagt ist, und

(g) Umschaltmittel (20), durch welche in den Strahlengang des Meßlichtbündels (12) wahlweise zur Herstellung eines Meßstrahlenganges eine erste Gasküvette (26) mit einem zugehörigen Blockingfilter (32) oder zur Herstellung eines Referenzstrahlenganges eine zweite Gasküvette (28) mit einem zugehörigen Blockingfilter (32) hineinbewegbar sind,

**dadurch gekennzeichnet, daß**

(h) die Umschaltmittel (20) Küvettenwechselmittel (22) zum Hineinbewegen der ersten und zweiten Gasküvetten (26,28) in den Strahlengang des Meßlichtbündels (12) und davon getrennte Filterwechselmittel (24) zum Hineinbewegen der Blockingfilter (32) in den Strahlengang des Meßlichtbündels (12) enthalten, und

(i) die Küvettenwechselmittel (22) und die Filterwechselmittel (24) so gesteuert sind, daß ein und dasselbe Blockingfilter (32) in Verbindung mit dem zugehörigen ersten Gasfilter (26) und in Verbindung mit dem zu diesem ersten Gasfilter (26) gehörigen zweiten Gasfilter (28) im Strahlengang des Meßlichtbündels (12) angeordnet ist.

2. Mehrkomponenten Photometer nach Anspruch 1, **dadurch gekennzeichnet, daß**

(a) die Küvettenwechselmittel von einem ersten Filterrad (22) gebildet sind, in welchem als Filter die ersten und die zweiten Gasküvetten (26,28) sitzen, und

(b) die Filterwechselmittel von einem zweiten Filterrad (24) gebildet sind, welches die Blockingfilter (32) trägt.

## Claims

1. Multicomponent photometer, containing

(a) a light source (10) emitting a continuum and from which a measuring light beam (12) originates,

(b) a sample vessel (14) into which a sample gas can be introduced and through which the measuring light beam (12) passes,

(c) a plurality of first gas vessels (26) which are filled with different gases looked for in the sample gas,

(d) one or more second gas vessels (28) each of which is associated with at least one of the first gas vessels (26) and contains a reference gas,

(e) one or more blocking filters (32), i.e. each of which transmits only a limited spectral region encompassing an absorption band of a gas contained in a first gas vessel (26),

(f) a detector (36) impinged upon by the measuring light beam (12), and

(g) change-over means (20) for selectively moving into the path of rays of the measuring light beam (12) either a first gas vessel (26) conjointly with an associated blocking filter (32) for providing a measuring path of rays or a second gas vessel (28) conjointly with an associated blocking filter (32) for providing a reference path of rays,

characterized in that

(h) the change-over means (20) comprise sample changing means (22) for moving the first and second gas vessels (26, 28) into the path of rays of the measuring light beam (12) and filter changing means (24) separated therefrom for moving the blocking filters (32) into the path of rays of the measuring light beam (12), and

(i) the vessel changing means (22) and the filter changing means (24) are controlled such that one and the same blocking filter (32) is arranged in the path of rays of the measuring light beam (12) in conjunction with the associated first gas filter (26) and in conjunction with the second gas filter (28) which is associated with this first gas filter (26).

2. Multicomponent photometer according to claim 1, characterized in that

(a) the vessel changing means are formed by a first filter wheel (22) in which the first and the second gas vessels (26, 28) are seated and constitute filters, and

(b) the filter changing means are formed by a second filter wheel (24) which carries the blocking filters (32).

**Revendications**

1. Photomètre à plusieurs constituants, comprenant

(a) une source lumineuse (10) émettant un continuum, un faisceau lumineux de mesure (12) émanant de cette source lumineuse,

(b) une cuvette d'échantillon (14) dans laquelle un gaz d'échantillon est introduisable et par laquelle passe le faisceau lumineux (12),

(c) une pluralité de premières cuvettes de gaz (26) remplies de gaz différents recherchés dans le gaz d'échantillon,

(d) une ou plusieurs secondes cuvettes de gaz (28) dont chacune est associée à au moins l'une des premières cuvettes de gaz (26) et comprend un gaz de référence,

(e) un ou plusieurs filtres de bloquage, c'est-à-dire des filtres (32) dont chacun ne laisse passer qu'un domaine spectral limité autour d'une bande d'absorption d'un gaz contenu dans une première cuvette de gaz (26),

(f) une détecteur (36) auquel est appliqué le faisceau lumineux de mesure (12), et

(g) des moyens de renversement (20) par lesquels on peut déplacer dans la marche des rayons du faisceau lumineux sélectivement une première cuvette de gaz (26) avec un filtre de bloquage (32) associé afin de produire une marche des rayons de mesure, ou une seconde cuvette de gaz (28) avec un filtre de bloquage (32) associé afin de produire une marche des rayons de référence,

**caractérisé par le fait que**

(h) les moyens de renversement (20) comprennent des moyens d'échange de cuvette (22) destinés à déplacer les premières et les secondes cuvettes de gaz (26, 28) dans la marche des rayons du faisceau lumineux de mesure (12), et des moyens d'échange de filtre (24) séparés de ceux-ci destinée à déplacer les filtres de bloquage (32) dans la marche des rayons du faisceau lumineux de mesure (12), et

(i) les moyens d'échange de cuvette (22) et les moyens d'échange de filtre (24) sont commandés de sorte que le même filtre de bloquage (32) est disposé en connexion avec le premier filtre de gaz (26) associé et en connexion avec le second filtre de gaz (28) appartenant à ce premier filtre de gaz (26) dans la marche des rayons du faisceau lumineux de mesure (12).

2. Photomètre à plusieurs constituants selon la revendication 1, **caractérisé par le fait que**

(a) les moyens d'échange de cuvette sont formés par une première roue de filtre (22) dans laquelle la première et la seconde cuvette de gaz (26, 28) sont situées comme filtre, et

(b) les moyens d'échange de filtre sont formés par une seconde roue de filtre (24) supportant les filtres de bloquage (32).

*Fig.1*

Fig. 2

**Fig. 3**

9

*Fig. 4*

Fig.5

Fig.6